# EUROPEAN PATENT SPECIFICATION

(11) **EP 3 797 267 B1**
(45) Date of publication and mention of the grant of the patent: **07.06.2023**
(21) Application number: 19806435.4
(22) Date of filing: 27.03.2019
(51) Int. Cl.: G01D 5/00, G01P 13/00, G01P 21/00

(54) **SYSTEM AND METHOD FOR DETECTING FAULTY PRESSURE MEASUREMENTS IN FLUSH AIR DATA SYSTEM USING PRESSURE PATTERNS AMONG ADJACENT PORTS**
SYSTEM UND VERFAHREN ZUR ERKENNUNG VON FEHLERHAFTEN DRUCKMESSUNGEN IN EINEM SPÜLLUFTDATENSYSTEM UNTER VERWENDUNG VON DRUCKMUSTERN ZWISCHEN BENACHBARTEN PORTS
SYSTÈME ET PROCÉDÉ POUR LA DÉTECTION DE MESURES DE PRESSION DÉFECTUEUSE DANS UN SYSTÈME FADS (FLUSH AIR DATA SYSTEM) AU MOYEN DE MODÈLES DE PRESSION ENTRE DES ORIFICES ADJACENTS

(30) Priority: 22.05.2018 IN 201841019119
(43) Date of publication of application: 31.03.2021
(73) Proprietor: INDIAN SPACE RESEARCH ORGANIZATION, Bangalore 560231 (IN)
(72) Inventor: JAYAKUMAR, M, Thiruvananthapuram 695022 (IN); FINITHA, Kc, Thiruvananthapuram 695022 (IN); REMESH, N, Thiruvananthapuram 695022 (IN); VIDYA, Sb, Thiruvananthapuram 695022 (IN); SHASHI, Krishna, Thiruvananthapuram 695022 (IN); JAYANTA, Dhaoya, Thiruvananthapuram 695022 (IN); ABDUL SAMAD, Ak, Thiruvananthapuram 695 022 (IN); RAVIKUMAR, C, Thiruvananthapuram 695022 (IN); SHYAM MOHAN, N, Thiruvananthapuram 695022 (IN)
(74) Representative: Schulz Junghans Patentanwälte PartGmbB
(86) International application number: PCT/IN2019/050246
(87) International publication number: WO 2019/224833

(56) References cited:
- WO-A1-2010/122567
- GUANGQIANG CHEN et al.: "Study on Algorithms of Flush Air Data Sensing System for Hypersonic Vehicle", APISAT2014'', 2014 Asia-Pacific International Symposium on Aerospace Technology, APISAT2014, Procedia Engineering, vol. 99, 2015, pages 860-865, XP029140088,
- N. SHYAM MOHAN et al.: "Flush air data sensing system", CURRENT SCIENCE, vol. 114, no. 1, 10 January 2018 (2018-01-10), XP55662740,

## Description

### FIELD OF INVENTION

The present invention is in the field of Flush Air Data System, and relates to the detection and isolation in real time blocked pressure ports and/or faulty pressure measurements in Flush Air Data Systems (FADS). The invention is useful in FADS of re-entry vehicles, fighter and civil aircrafts and planetary probes using FADS.

### BACKGROUND OF INVENTION

FADS generates air data parameters like angle of attack, side slip angle, Mach number and dynamic pressure using surface pressure measurements from pressure ports flushed with the nose cone of the vehicle. These air data parameters are used by the guidance and control system of re-entry vehicles for real time control, gust load alleviation, etc. Re-entry vehicles control the aerodynamic heating and structural loads acting on the vehicle by modulating the angle of attack. Hence control of angle of attack is vital during re-entry. Mach number and dynamic pressure are used for gain scheduling and for switch over of control to aerodynamic control surfaces from reaction control systems. Hence measurement of air data parameters at all phases of flight is essential in re-entry vehicles.

As FADS relies on surface pressure measurements from pressure ports on the nose cone of the vehicle it is essential that these pressure measurements are free of faults. However faults in these pressure measurements can occur as a result of faults in the pressure transducers or due to blockage of pressure ports due to icing or foreign particles. Blocked pressure ports and faulty transducers can result in estimated air data parameters to deviate significantly from their true values, which may ultimately lead to loss of control and vehicle and mission failure. Hence it is essential to remove blocked pressure ports or failed transducers from FADS computations for enhancing the accuracy and reliability of the FADS estimates. This requires an innovative Fault Detection and Isolation (FDI) scheme that is computationally less cumbersome and effective for implementation in an onboard computer.

US7257470 describes a fault isolation method and apparatus in artificial intelligence based air data systems. It is specific to artificial intelligence based air data systems. In this work, the pressure values measured are combined using some form of artificial intelligence algorithm such as neural networks to generate global air data parameters. These output air data parameters are used along with some of the pressure readings from the pressure ports to generate the estimate of each of the measured pressure readings. The difference between the estimated pressure value and measured pressure value is used for declaring a port as failed. Thus this is an inverse method that requires as much number of neural networks as the number of pressure ports. For the case of nine pressure ports in addition to the neural network used for computing the air data parameters, nine additional neural networks are required for estimating the pressures at the nine ports. Thus this method operates on the input parameters of FADS viz. pressures, for FDI purpose and hence requires an inverse model.

GB2419673 describes a fault isolation method and apparatus in artificial intelligence based air data systems for aircraft. A method providing fault isolation, in an air data system which uses artificial intelligence to generate an air data parameter, includes generating the air data parameter as a function of a plurality of measured values such as static pressures. Then, estimates of each of the plurality of measured values are generated as a function of the generated air data parameter. Each measured value can then be compared to its corresponding estimate to determine if a difference between the measured value and its corresponding estimate exceeds a threshold and therefore indicates a fault in a device which provides the measured value. The artificial intelligence algorithms may be neural networks or support vector machines. The air data system may be FADS. The air data parameter may be an angle of attack, an angle of side slip, a Mach number, a global total pressure or a global static pressure for the air vehicle. The plurality of measured values may comprise a measured value indicative of a control surface position, a control surface loading, a force, a vehicle mass at take-off, a vehicle mass balance, a remaining fuel mass, an engine thrust, satellite information, an altitude, an air temperature, a vehicle acceleration, a vehicle attitude or a landing gear position.This patent is the same as US Patent number 7257470 by the same inventors.

US7213454B2 describes a method and apparatus for obtaining improved accuracy and range for air data parameters inferred from independent measurements of inter dependent pressures. It presents a method of calculating a system level air data parameter for an aircraft, for example aircraft angle-of-attack (AOA) and/or angle' of' side slip (AOS), Includes measuring a plurality of local static pressures pi. Next, a plurality of non-dimensional pressure ratios are each generated as a function of one of the plurality of local static pressures pi, a predicted system static pressure Ps_{predicted}, and a predicted impact pressure qc_{predicted}. Then, the system level air data parameter is calculated as a function of the generated plurality of non-dimensional pressure ratios. Air data systems having air data computers configured to implement the method are also disclosed. The air data systems can be FADS or other types of air data systems. The above invention makes use of non-dimensional pressure ratios for improving the accuracy and reliability of air data computations and not directly works with input pressures.

US7284420B2 describes an air data system and method for rotary aircraft. The air data system includes a plurality of flush ports connected via tubing to a plurality of air flow sensors that can measure air flow speeds as low as approximately 0.02 knots. The flush ports are arranged around a main rotor shaft and below a rotor hub of the rotary aircraft to help reduce the impact of rotor down wash. The flush ports and tubing permit air to flow into the air flow sensors, which allows the plurality of air flow sensors to measure speed and direction of cross-wind components of air flow surrounding the rotary aircraft. The above invention is limited to FADS for rotary craft. There is nothing mentioned about fault detection and isolation scheme in FADS in the above patent.

US7379839B2 describe multi-function air data probes employing neural networks for determining local air data parameters. It includes a barrel having multiple pressure sensing ports for sensing multiple pressures. Instrumentation coupled to the pressure sensing ports provides electrical signals related to the multiple pressures. A neural network, coupled to the instrumentation, receives as inputs the electrical signals related to the multiple pressures, and in response, the neural network provides, as an output, electrical signals indicative of at least one local air data parameter for the air data sensing probe. The above invention utilizes measured pressures along with neural networks for air data parameters. Off line training of the neural network is required for this purpose. Further, there is no mention about fault detection and isolation scheme in this patent.

US2003/0219252A1 describes a Molecular Optical Air Data System (MOADS). It directly measure wind speed and direction, density, and temperature of a body of air. From these measurements, a complete set of air data products can be determined. In contrast to pitot tubes, however, MOADS can operate at high angles of attack. In the proper configuration, MOADS can continue to measure air data products at angles of attack of 90 degrees. The MOADS instrument is a flush-mount design which lends itself to low observability since there are no aircraft protrusions to generate a radar cross section. MOADS is also air frame independent, and is much less costly to calibrate, recalibrate or service due to this lack of dependence. The system uses a Fabry-Perot interferometer to detect the (incoherent) Doppler shift from laser light back scattered by air molecules and aerosols (Rayleigh and Mie scattering). The laser used to provide the signal utilizes short wavelengths operating in the ultraviolet at 266 nm, which is invisible to the human eye and rapidly absorbed by the atmosphere. Although the system will take advantage of aerosols when they are available, a significant advantage of MOADS over similar air data system technologies is the ability to make measurements in clear air (air molecules only), without the presence of aerosols, which also provides the ability to measure density and temperature.The above invention makes use of laser light and Fabry-Perot interferometer to detect the (incoherent) Doppler shift from laser light back scattered by air molecules and aerosols (Rayleigh and Mie scattering). This information is then used for air data generation. However, there is no mention of any fault detection and isolation scheme in the above patent.

US8930062B2/ Indian Patent No. 274857/PCT Application No.PCT/IN2009/000349 describes a system and method for detecting and isolating faults in pressure sensing of FADS. This patent relates to a method for detecting and isolating faults in pressure ports and pressure transducers of a pressure sensing system, comprising of 5 levels of fault detection *viz:* a Triple Modular Redundant (TMR) check on measured pressures, then determining whether the measured surface pressures lie within a desired range to a coarse level at a specific instant of flight phase; checking constant pressure and rate on the measured surface pressures to identify full or partial blockage in the pressure ports. The final check is based on generating one or more structured sets of angle of attack and side slip angle estimates from predefined combinations of said pressure ports lying along a vertical and horizontal meridians of a vehicle nose cap; and detecting and isolating the faults in the pressure ports and pressure transducers in the vertical and horizontal meridians based on said one or more structured sets of angle of attack and side slip angle estimates. The above invention mainly relies on structured set of angle of attack and side slip estimates and not works with pressures which are the basic input of FADS. The above mentioned invention needs five levels of FDI checking. Fault detection and isolation in above patent requires comparison among ten angle of attack estimates and forty angle of side slip estimates.

Fault tolerant neural network algorithm for flush air data sensing, Journal of Aircraft, Vol 36, Issue 3, pp. 541-549, May 1999, Rohloff TJ, Whitmore SA and Catton I describes a combination of aerodynamic and neural network models used to translate a discrete pressure distribution from the nose of an aircraft into a set of air data parameters, including static pressure, dynamic pressure, Mach number, angle of attack and angle of side slip. A total of 20 neural networks are used for air data estimation. A total of 11 pressure ports are used in this work. Neural networks that work on a group of five or six pressure ports are developed for generating the air data estimates. The mean of the air data estimates from all the groups is taken first. Fault detection is carried out by looking at the variance of the air data estimate of a group from the mean of the estimate.

Fault tolerance and extrapolation stability of a neural network air data estimator, Journal of aircraft, Vol 36, Issue 3, pp. 571-576, May 1999, Rohloff TJ, and Catton I describes the performance of a neural network FADS in presence of pressure port failures. The system has 11 pressure ports. Groups of neural networks with five or six pressures as input signal is developed. The estimates from the different pressure groupings are then averaged to give a best estimate. For fault detection, a set of FADS pressures associated with estimated values of the air data parameters is calculated using an inverse relationship. The sum of squares of the residuals between measured and calculated surface pressures is then obtained. A statistical goodness of fit test using Chi-Squared approach is used for detecting and isolating failed ports.

Failure management scheme for use in a flush air data system, Aircraft design, Vol 4, pp. 151-162, 2001, SrinathaSastry CV, Raman KS and LakshmanBabu B describes use of failure indicator vectors and symbolic reasoning for selecting correct values out of a number of redundant values of computed air data parameters. The redundant values of the parameters are taken in combinations of two at a time and the absolute differences are computed. The arrangement of these differences in a particular *order* results in a *vector* of differences. By representing each of the threshold-bound conditions by a symbol say, '0' and the threshold unbound condition by the symbol say,'1' respectively, a vector of these two symbols can be obtained having a one-to-one correspondence with the vector of differences. Thus corresponding to the error value out of a set of redundant values of a parameter, there is a specific vector of two symbolic elements. This is called as the *failure indicator vector* specific to that error value and hence to the pair of orifices used to compute that value. Each vector is a standard failure indicator vector indicating the failure of a particular *orifice pair.* This uniqueness property of each of these vectors of symbols in relation to an orifice pair is used for failure management purpose. The above methodology indicates the orifice pair contributing to an erroneous air data estimate.

Failure detection and fault management techniques for a pneumatic high angle of attack Flush Air Data System (Hi-FADS), *NASA Technical Memorandum-4335,* Stephen.A. Whitmore and Timothy R Moesdescribes a fault detection technique based on the statistical properties of pressure residuals at the ports. This algorithm requires the evaluation of residuals between the measured pressure data and the model predictions for each port. A method based on Chi-square analysis and weighted least square is used in this paper. Chi-square test on the pressure residuals is used for detecting a failure of pressure port. Once detected the effects of the failure are eliminated using weighted least squares. It is mentioned in this paper that the individual pressure residuals are Gaussian distributed. Therefore for a given data frame, the sum square of the scaled residuals (divided by the variance) should be distributed as a Chi-square variable with N-6 degree of freedom, where N is the total number of ports. The degree of freedom is reduced by five because the residuals are related by five parameters which have been computed from them. These parameters are the air data states, dynamic pressure, angle of attack, side slip angle, free stream static pressure and the calibration parameter. The statistical properties of the pressure residuals are to be validated from a large number of flight data. It is mentioned that the sample variances were evaluated using nearly a half million data frames from multiple flights. This evaluation of the statistical properties of pressure residuals can be cumbersome and is available only after a number of flight tests of the system.

To sum up the prior arts are having many limitations. The main drawbacks of prior art is that they rely on an inverse model for estimating the pressure values at the pressure ports. This complicates the FDI algorithm. Also extensive validation of statistical characteristics like variance of pressure residuals is required in prior art. In order to overcome these limitations a novel method for detecting faulty pressure measurements in FADS using pressure patterns among adjacent ports is developed. Further, our method highlights the redundancy configuration of the system which can tolerate blockage of pressure sensors, failures in pressure sensors, failures of the sensor electronics and failure of processing electronics and still can provide reliable air data output for use by control and guidance system of aerospace vehicle.

### OBJECTS OF THE INVENTION

As FADS relies on surface pressure measurements from pressure ports on the nose cone of the vehicle it is essential that these pressure measurements are free of faults. However faults in these pressure measurements can occur as a result of faults in the pressure transducers or due to blockage of pressure ports due to icing or foreign particles. Blocked pressure ports and faulty transducers can result in estimated air data parameters to deviate significantly from their true values, which may ultimately lead to loss of control and vehicle and mission failure. Hence it is essential to remove blocked pressure ports or failed transducers from FADS computations for enhancing the accuracy and reliability of the FADS estimates. This requirement led to the development of an FDI scheme that is computationally less cumbersome and effective for implementation in an on-board computer.

The primary objective of the present invention is to develop the FDI methodology proposed which is simple and well suited for on-board implementation.

Another object of the present invention is to develop the FDI methodology which works on the input pressures directly and hence is advantageous for FDI purpose as inverse model computation, like the pressure estimates at each port are not required.

### BRIEF DESCRIPTION OF THE DRAWINGS

The foregoing and other features of the present disclosure will become more fully apparent from the following description and appended claims, taken in conjunction with the accompanying drawings. Understanding that these drawings depict only several implementations in accordance with the disclosure and are therefore, not to be considered limiting of its scope, the disclosure will be described with additional specificity and detail through use of the accompanying drawings.
Figure 1: Pressure port configuration and classification of inner & outer ports
Figure 2: Interface among different modules in FADS
Figure 3: Redundancy configuration in FADS
Figure 4: Pressure deviations among adjacent ports
Figure 5: Centre port fault detection (Port 5)
Figure 6: Inner port fault detection Ports (2, 4, 6 and 8)
Figure 7: Outer port fault detection (Ports 1, 3, 7 and 9)
Figure 8: Centre port fault detection after two failures (Port 5)
Figure 9: Inner port detection after two failures (Ports 2, 4, 6 and 8)

### DETAIL DESCRIPTION OF THE INVENTION

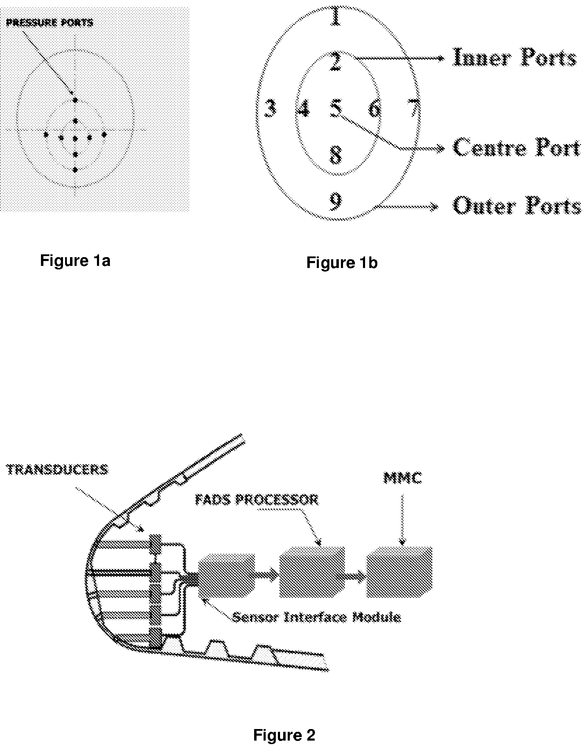

The system under consideration has nine pressure ports located on the nose cap of the vehicle (Figure 1a and 1b). The identification number of the pressure ports is also shown in the figure. In this novel technique of fault detection, the pressure ports are classified as outer and inner ports. The outer ports lie along the periphery of the outer circle in the nosecap and inner ports lie along the inner circle in the nosecap of the vehicle. In addition, there is the inner pressure port which is located at the centre of the nose cap. The maximum pressure difference that can occur between two adjacent ports in the inner or outer ports for different flight conditions of Mach number, angle of attack and side slip angle is established initially through extensive simulations.

During flight, each pressure port reading is compared against predefined thresholds with its nearest two neighbouring ports in the outer or inner circle in the nosecap. For the centre port the comparison is done with inner circle ports 4 and 6. The faulty port pair is detected by this comparison technique. The faulty pressure port is further isolated by detecting significant changes than normally expected over a time period of one minor cycle computation time of the processor. Two sets of thresholds are used, one for Mach>1 and another for Mach<1.

Each pressure port has three absolute pressure transducers that measure the surface pressure at the particular pressure port location. The pressure ports are connected to pressure sensors through tubing's for reducing the temperature encountered by the sensors.

The interface among the different modules in FADS is shown in Figure 2. The pressure ports are connected to the pressure transducers through pneumatic tubing's. The length of the pneumatic tubing is selected such that the temperatures encountered by the sensors are within limits during aerodynamic heating phase of the trajectory. The output of the pressure transducers are connected to the FADS Sensor Interface Modules (FSIM). The sensor interface modules are in turn connected to the DSP processor based FADS electronics which executes the FADS algorithm. The output of the FADS electronics *Viz.* the air data parameters are sent to the Mission Management Computer (MMC) for use by the guidance and control system of the aerospace vehicle.

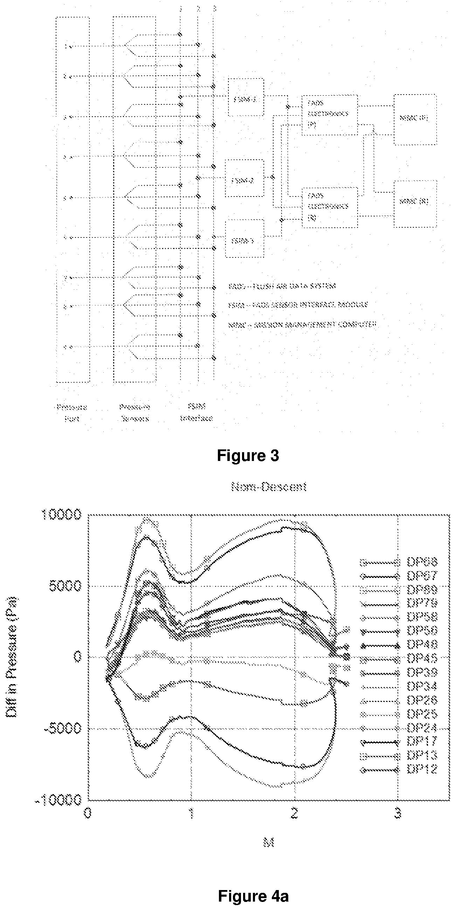

The redundancy configuration of FADS is shown in figure 3. The FADS system requires only 5 pressure measurements for computing the air data states. However, nine pressure ports are provided to take care of port blockages. Thus redundancy is provided at pressure port level itself and blockage of two horizontal and two vertical ports can be tolerated. Each pressure port has three absolute pressure transducers that measure the surface pressure at the particular pressure port location. Only two sensors are required at a pressure port to obtain a reading corresponding to a pressure port. Thus failure of one sensor at a pressure port can be tolerated and still valid pressure readings can be obtained for use from that pressure port.

Three FSIM packages are provided in the system. Each has access to one sensor of each pressure port. Total failure of any one FSIM package can be tolerated without affecting the system performance or degradation in system accuracy. Dual redundancy is provided in both FADS electronics and Mission Management Computers also. Direct as well as cross strapped connection is done between FADS electronics and Mission Management Computers. This is done to ensure that failure of single FADS electronics or mission management computer does not affect system performance. Thus the entire system has redundancy in pressure ports, pressure sensors, FSIM package, FADS electronics and mission management computer.

### TMR check on input pressures at a port (FDI level 1):

The first FDI check carried out is a TMR logic check on the pressure transducers at each pressure port. Under no-failure condition of the pressure transducer all the three pressure readings at a pressure port should match within a threshold value. By cross comparison of the three pressure readings at a pressure port (TMR logic) failure of pressure transducer can be detected. This procedure is done for all the nine pressure ports. This check however cannot detect fully or partially blocked ports or simultaneous failure of two pressure transducer at a pressure port.

Hence the next level of check, *viz.* nearest neighbour check is done.

### Pressure pattern in neighbouring pressure ports:

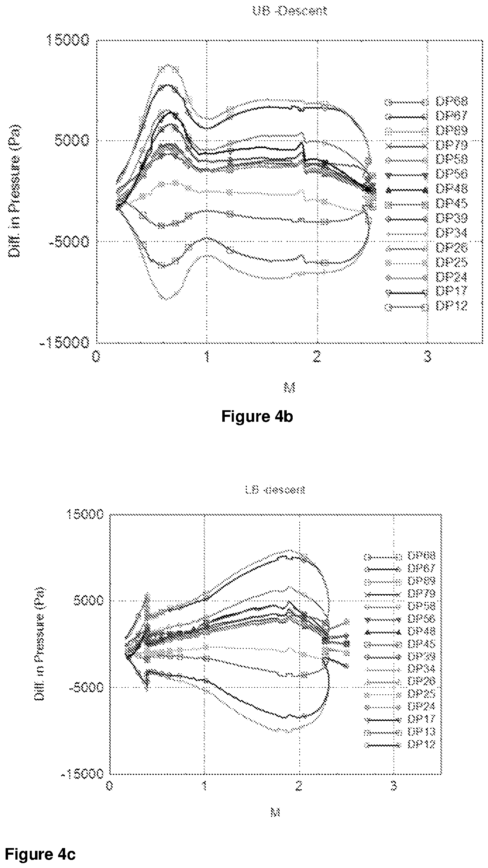

The maximum pressure difference that can occur between two adjacent ports in the inner or outer circle and centre port for different flight conditions of Mach number, angle of attack and side slip angle is established initially through extensive simulations. Nominal, upper bound and lower bound trajectories are considered for this purpose. Typical values of these pressure differences for nominal, upper and lower bound trajectories are shown in Figure 4a, 4b and 4c.

### "Nearest Neighbour" check on measured pressures (FDI Level 2):

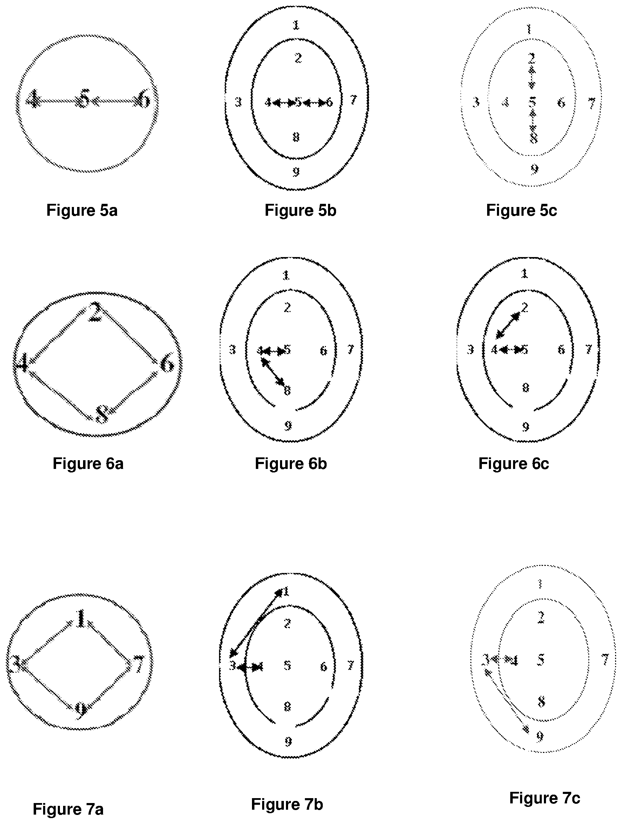

During flight, each pressure port reading is compared against predefined thresholds with its nearest two neighbours in the corresponding circle. For the centre port the comparison is done with inner circle ports 4 and 6 (Figure 5a, 5b). As mentioned, the decision threshold for this logic is arrived at based on detailed analysis of nominal and off nominal flight trajectories of the re-entry vehicle. For the specific case here, threshold levels in Pascals as given in Table1 were used. Margin of 1500 Pa is provided to eliminate any false alarms that can come due to error in the judgement of these thresholds through simulations.

**Table 1: Thresholds used for fault detection**

| **Condition** | **Maximum pressure difference between adjacent ports** | **Margin for Cp Dispersion** | **Threshold** | **Maximum pressure difference between adjacent ports after adjacent port failure** | **Margin for Cp Dispersion** | **Threshold** |
|---|---|---|---|---|---|---|
| M ≤ 1 | 8016 | 1503 | **10000** | 12536 | 1503 | **14500** |
| M>1 | 6661 | 1503 | **8500** | 10960 | 1503 | **12500** |

The faulty port pair is detected by this comparison technique. The faulty pressure port is further isolated by detecting significant changes than normally expected over a time period of one minor cycle computation time of the processor. Two sets of thresholds are used, one for Mach > 1 and another for Mach<1.
- Detection of a faulty centre port (5) (Fig 5a)
   - The absolute value of pressure differences between the centre port (5) and the inner ports (4 and 6) are obtained and compared against a threshold.
   - Switching of thresholds is done based on INS derived Mach number.
   - If both the pressure differences (absolute values) lie within the threshold, then the centre port (5) is good.
   - If anyone pressure difference (absolute value) violates the threshold, then the 2 ports in that port combination is detected as faulty.
- Detection of a faulty inner circle port (2,4,6,8) (Fig 6a)
   - The absolute value of pressure differences between the inner ports (2-4, 4-8, 8-6, 6-2) are obtained and compared against a threshold.
   - Switching of thresholds is done based on INS derived Mach number.
   - If all the pressure differences (absolute values) lie within the threshold, then all the inner ports are good.
   - If the pressure difference (absolute value) violates the threshold, then the 2 ports in that port combination is detected as faulty.

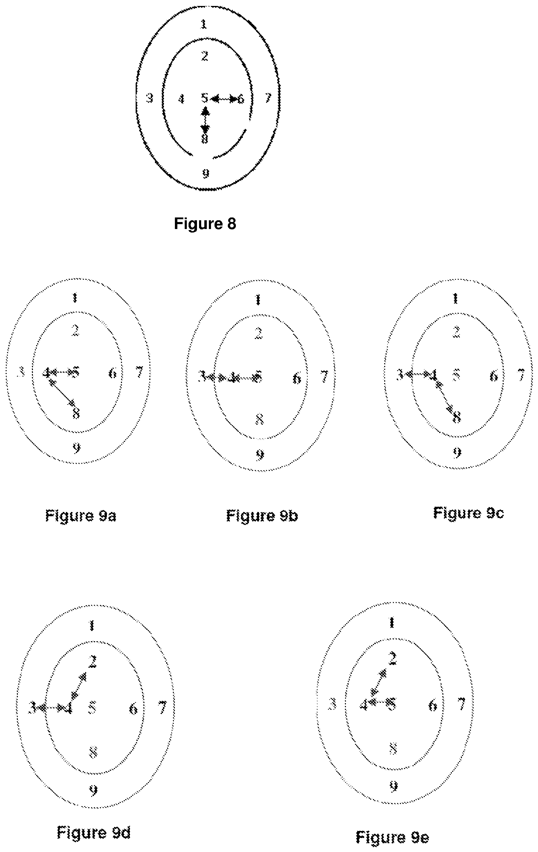

   - Detection of a faulty outer circle port (1,3,7,9) (Fig 7a)
      - The pressure differences (absolute value) between the outer ports (1-3, 3-9, 7-9, 1-7) are obtained and compared against a threshold.
      - Switching of threshold is done based on INS derived Mach number.
      - If all the pressure differences (absolute values) lie within the threshold, then all the outer ports are good.
      - If the pressure difference (absolute value) between any 2 outer ports violate the threshold, then the 2 ports in that port combination is detected as faulty.
   - Isolation of the faulty port after detection of a faulty pair
      - The pressure at the port is compared with the value measured in previous minor cycle.
      - If the absolute value of the difference between the current and previous pressure values at the port over a minor cycle of 20 milliseconds is greater than 1000Pa then that port is instantaneously isolated in the current minor cycle and air data computation is performed without these ports.
   - FDI logic after one port failure:
      - After isolation of a pressure port, the definition of the ports with which its neighbours are compared is changed for carrying out further fault detection and isolation.
      - For failure of ports in inner/outer circle, FDI logic for the port diametrically opposite the failed port remains the same.
      - In case the first failure occurs in ports 4 or 6, FDI of centre port is carried out by comparison of port 5 with ports 2 and 8 as shown in Figure 5c.
      - For inner port failure case, the remaining two ports are compared with the port diametrically opposite the failed port as well as with the centre port (if the centre port is not faulty) or the outer circle port closest to them (if the closest outer circle port is not faulty). This is shown in Figures 6 b and 6c for representative cases of failure of ports 2 and 8 respectively.
      - For outer port failure case, the remaining two ports are compared with the port diametrically opposite the failed port as well as with the inner circle port closest to them. This is shown in Figures 7 b and 7c for representative cases of failure of ports 1 and 9 respectively.
      - Switching of thresholds is done based on Mach number.
      - Change of 1000 Pa from previous minor cycle is used for isolation of second failure.
      - FDI Level 2 check is not done for a port which is already isolated by the FDI Level 1 check.
   - FDI logic after two port failures:
      - After isolation of two pressure ports also, the definition of the ports with which its neighbours are compared is changed for carrying out further fault detection and isolation.
      - For the centre port FDI level 2 check, the centre port is compared with the two remaining inner ports that are good (after TMR isolation of the 2 faulty inner ports) as shown in Figure 8.
      - The faulty pair is detected and previous cycle FDI Level 2 flag status is used for isolation of centre port failure. If more than 2 inner ports have been isolated by TMR, then centre port isolation is done by comparing previous cycle pressure.
      - For the inner ports, if two adjacent ports have failed, then comparison is done with the remaining two adjacent pressure ports which can either be a centre, inner or outer port. This is shown in Figures 9a to 9e for the representative case of pressure port 4 when its adjacent ports have failed. After detecting the faulty pair, further port isolation can be done by comparing previous cycle pressure against a threshold of 1000 Pa. The logic is extended to other ports also in the inner circle (2, 6, 8).
      - For the outer port detection (Ports 1, 3, 7 and 9), failure of 2 adjacent ports will exhaust all the adjacent ports and hence failure detection and isolation is by comparison against a threshold of 1000 Pa with the previous pressure value.

The presented methodology has a wide coverage of faults and is suitable for on-board implementation in re-entry vehicles.

## Claims

1. A system for detecting and isolating faults in a Flush Air Data System, FADS,
comprising:
a plurality of pressure ports flushed to a nose cap of a space vehicle in crucifix form;
at least three pressure transducers connected to each pressure port by a pneumatic tube for measuring surface pressure from said plurality of pressure ports;
a plurality of FADS Sensor Interface Modules, FSIM, each connected to said pressure transducers;
a digital signal processor, DSP, based FADS electronics connected to the said FSIM, and
a Mission Management Computer, MMC,
connected to the output of the
FADS electronics through direct as well as cross strapped connection,
wherein said DSP and said MMC are adapted to
detect faulty pressure port from said plurality of pressure ports by cross comparing at least three pressure readings between two nearest neighbours at each pressure port against predefined thresholds;
isolating two blocked or failed pressure ports if the pressure difference between them exceeds said predefined threshold value.

2. The system as claimed in claim 1, wherein, pneumatic tubes of particular length are selected for reducing the temperature encountered by the sensors during aerodynamics heating phase of the trajectory.

3. The system as claimed in claim 1, wherein the pressure ports are classified as outer and inner ports. The outer ports lie along the periphery of the outer circle in the nose cap and inner ports lie along the inner circle in the nose cap of the vehicle. In addition, there is the inner most pressure port which is located at the centre of the nosecap.

4. The system as claimed in claim 1, wherein redundancy is provided at pressure port level to tolerate blockage of up to two horizontal and two vertical ports.

5. The system as claimed in claim 1, wherein dual redundancy is provided in both FADS electronics and Mission Management Computers. The redundancy scheme in pressure ports, pressure sensors, FSIM package, FADS electronics and mission management computer is such that failure of any one of the above elements does not affect overall system performance.

6. A method for detecting and isolating faults in pressure ports and pressure transducers in a Flush Air Data System, FADS, comprising:
Detecting faulty pressure sensors at a pressure port by cross comparing at least three pressure readings between two nearest neighbors at each pressure port against predefined thresholds;
isolating blocked or failed pressure ports if the
pressure difference between them is
more than a desired threshold value during one computational update cycle time;
wherein two nearest neighbors are chosen depending on the location of previously failed pressure ports, the definition of the nearest neighbor being changed after one/two port failures depending upon the ports that have failed.

7. The method as claimed in claim 6 wherein two sets of thresholds are used based on INS derived Mach number for switching between Mach>1 and Mach<1.

8. The method as claimed in claim 6 wherein, maximum pressure difference between two adjacent ports for different flight conditions of Mach number, angle of attack and side slip angle is established initially through extensive simulation.

9. The method as claimed in claim 6 wherein threshold pressure value is 1000 Pa over a computational time of 20 milliseconds.

## Patentansprüche

1. Ein System zur Erkennung und Isolierung von Fehlern in einem Spülluftdatensystem, FADS, umfassend:
eine Mehrzahl von Drucköffnungen, die kreuzförmig an der Bugnase eines Raumfahrzeuges angebracht sind;
mindestens drei Druckwandler, die mit jeder der Drucköffnungen über Druckrohrleitungen verbunden sind, um Oberflächendruck an besagter Mehrzahl von Drucköffnungen zu messen;
eine Mehrzahl von FADS-Sensor-Schnittstelle-Modulen, FSIM, jedes verbunden mit genannten Druckwandlern;
eine auf einem digitalen Signalprozessor, DSP, basierende FADS-Elektronik, verbunden mit genannten FSIM und
einen Missions-Management-Computer, MMC, verbunden mit den Ausgängen der FADS-Elektronik über direkte sowie überkreuzte Verbindungen,
wobei besagte DSP und MMC so ausgestaltet sind, dass sie fehlerhafte Drücke von der genannten Mehrzahl von Drucköffnungen erkennen können, indem sie Überkreuz-Vergleiche von mindestens drei ausgelesenen Druckmesswerten zweier nächstgelegener Nachbarn jeder Drucköffnung gegenüber vordefinierten Schwellwerten anstellen;
und dass sie zwei blockierte oder ausgefallene Drucköffnungen isolieren, wenn die Druckdifferenz zwischen ihnen den vordefinierten Schwellwert übersteigt.

2. Das System nach Anspruch 1, wobei die Druckrohrleitungen bestimmter Längen ausgewählt sind, um die von den Sensoren während der aerodynamischen Aufheizphase der Flugbahn festgestellte Temperatur zu mindern.

3. Das System nach Anspruch 1, wobei die Drucköffnungen in innere und äußere Drucköffnungen klassifiziert sind. Die äußeren Drucköffnungen liegen entlang der Peripherie des äußeren Kreises in der Bugnase und die inneren Drucköffnungen liegen entlang des inneren Kreises in der Bugnase des Fahrzeuges. Zusätzlich gibt es einen inneren Höchst-Druck-Anschluss, welcher im Zentrum der Bugnase liegt.

4. Das System nach Anspruch 1, wobei auf Ebene der Drucköffnungen eine Redundanz bereitgestellt wird, um die Blockade von bis zu zwei horizontalen und zwei vertikalen Drucköffnungen tolerieren zu können.

5. Das System nach Anspruch 1, wobei im FADS sowie im Missions-Management-Computer jeweils eine zweifache Redundanz bereitgestellt wird. Das Redundanz-Schema der Drucköffnungen, der Drucksensoren, der FSIM-Einheit, der FADS-Elektronik sowie dem Missions-Management-Computer ist so ausgestaltet, dass der Ausfall einer der genannten Elemente die Gesamtleistung des Systems nicht beeinträchtigt.

6. Ein Verfahren zur Fehlererkennung und -isolierung in Drucköffnungen und Druckwandlern in einem Spülluftdatensystem, FADS, umfassend: Erkennen von fehlerhaften Drucksensoren an einer Drucköffnung, mittels Überkreuz-Vergleich von mindestens drei ausgelesenen Druckmesswerten zweier nächstgelegener Nachbarn jeder Drucköffnung gegenüber vordefinierten Schwellwerten;
Isolieren von blockierten oder fehlerhaften Drucköffnungen, wenn die Druckdifferenz zwischen ihnen den vordefinierten Schwellwert innerhalb eines Computer-Berechnungszyklus übersteigt;
wobei zwei nächste Nachbarn in Abhängigkeit von der Lage der zuvor ausgefallenen Drucköffnungen ausgewählt werden und daraufhin nach ein/zwei Drucköffnungs-Ausfällen die Definition der nächsten Nachbarn geändert wird, je nachdem welche Öffnungen ausgefallen sind.

7. Das Verfahren nach Anspruch 6, wobei zwei Sätze von Schwellwerten auf der Grundlage der vom INS abgeleiteten Mach-Zahl eingesetzt werden, um zwischen Mach>1 und Mach<1 zu wechseln.

8. Das Verfahren nach Anspruch 6, wobei die maximale Druckdifferenz zwischen zwei benachbarten Öffnungen für verschiedene Flugbedingungen wie Machzahl, Anstellwinkel und Schlupfwinkel anfänglich durch umfangreiche Simulationen ermittelt wird.

9. Das Verfahren nach Anspruch 6, wobei der Druck-Schwellwert über eine Berechnungszeit von 20 Millisekunden bei 1000 Pa liegt.

## Revendications

1. Système de détection et d'isolation de défauts dans un système FADS, comprenant :
une pluralité de ports de pression à niveau avec un cône de pénétration d'hélice d'un véhicule spatial sous forme de croix ;
au moins trois transducteurs de pression connectés à chaque port de pression par un tube pneumatique pour mesurer la pression superficielle depuis ladite pluralité de ports de pression ;
une pluralité de modules d'interface de capteur FADS, FSIM, connectés chacun auxdits transducteurs de pression ;
une électronique FADS basée sur un processeur de signal numérique, DSP,
connectée auxdits FSIM, et
un ordinateur de gestion de mission, MMC, connecté à la sortie de l'électronique FADS par connexion directe ainsi que croisée,
dans lequel ledit DSP et ledit MMC sont adaptés à
détecter un port de pression défectueux parmi ladite pluralité de ports de pression en comparant de manière croisée au moins trois lectures de pression entre deux voisins les plus proches à chaque port de pression à des seuils prédéfinis ;
isoler deux ports de pression bloqués ou en échec si la différence de pression entre eux dépasse ladite valeur de seuil prédéfini.

2. Système selon la revendication 1, dans lequel des tubes pneumatiques de longueur particulière sont sélectionnés pour réduire la température rencontrée par les capteurs au cours d'une phase de chauffage aérodynamique de la trajectoire.

3. Système selon la revendication 1, dans lequel les ports de pression sont classifiés en tant que ports externes et internes, les ports externes se situent le long de la périphérie du cercle externe dans le cône de pénétration d'hélice et les ports internes se situent le long du cercle interne dans le cône de pénétration d'hélice du véhicule, en outre il y a le port de pression le plus interne qui est situé au centre du cône de pénétration d'hélice.

4. Système selon la revendication 1, dans lequel une redondance est prévue au niveau des ports de pression pour tolérer le blocage de jusqu'à deux ports horizontaux et deux ports verticaux.

5. Système selon la revendication 1, dans lequel une redondance double est prévue à la fois dans l'électronique FADS et les ordinateurs de gestion de mission, le schéma de redondance dans les ports de pression, les capteurs de pression, le boîtier FSIM, l'électronique FADS et l'ordinateur de gestion de mission est tel qu'une défaillance de l'un quelconque des éléments ci-dessus n'affecte pas les performances globales du système.

6. Procédé de détection et d'isolation de défauts dans des ports de pression et transducteurs de pression dans un système FADS, comprenant :
détecter des capteurs de pression défectueux à un port de pression en comparant de manière croisée au moins trois lectures de pression entre deux voisins les plus proches à chaque port de pression à des seuils prédéfinis ;
isoler des ports de pression bloqués ou en échec si la différence de pression entre eux est supérieure à une valeur de seuil souhaitée au cours d'un temps de cycle de mise à jour informatique ;
dans lequel deux voisins les plus proches sont choisis en fonction de l'emplacement de ports de pression précédemment en échec, la définition du voisin le plus proche étant changée après une/deux défaillances de port en fonction des ports qui ont échoué.

7. Procédé selon la revendication 6, dans lequel deux ensembles de seuils sont utilisés en fonction du nombre de Mach dérivé du système de navigation par inertie pour commuter entre Mach>1 et Mach<1.

8. Procédé selon la revendication 6, dans lequel une différence de pression maximale entre deux ports adjacents pour différentes conditions de vol de nombre de Mach, d'angle d'incidence et d'angle de dérapage est établie initialement par simulation extensive.

9. Procédé selon la revendication 6, dans lequel la valeur de pression seuil est de 1000 Pa sur une durée informatique de 20 millisecondes.
